# EUROPEAN PATENT APPLICATION

(11) **EP 2 378 835 A2**
(43) Date of publication of application: **19.10.2011**
(21) Application number: 11161763.5
(22) Date of filing: 08.04.2011
(51) Int. Cl.: H05B 6/10, H05B 6/06

(54) **Method and apparatus for preheating to allow welding to be performed**

(30) Priority: 16.04.2010 GB 1006370
(71) Applicant: Rapid Heat Systems Ltd, Saltney Chester CH4 8RW (GB)
(72) Inventor: Graham, Paul James, Chester, CH4 8RW (GB); Macallister, Andrew, Chester, CH4 8RW (GB)
(74) Representative: Hamilton, Alistair

(57) **Abstract**

Apparatus for pre-heating tubular articles prior to welding and a method of using the apparatus are disclosed. The apparatus comprises a support (22) for carrying tubular articles (10) such that they can be rotated together about long axis of the articles. A heater has a heating head (20) that can be placed adjacent to a region to be welded. The articles (10) can be rotated such that the region to be welded passes the heating head and is thereby heated to enable it to be welded subsequently. The heater is typically an induction heater. The method of welding tubular articles (10) compries mounting the articles in the support of a pre-heating apparatus of a welding installation embodying the invention and causing the articles to rotate such that a weld region passes adjacent to the heating head (20). Then a part of the weld region is welded after that part of the weld region has rotated past and has been heated by the heating head.

## Description

This invention relates to a method and apparatus for preheating to allow welding to be performed. It has particular application to welding large, tubular sections that can be used in construction of supporting members for oil platforms, wind turbines, and other structures.

Structural supporting members may be constructed from steel units. Each unit has a length of tube to which end flanges or fittings are welded. For some applications, bolts are passed through apertures in the end flanges to construct a support member of arbitrary length. Typically, each length of tube is formed from several shorter lengths of steel tube welded together. For some applications, the tube may be several metres in diameter. It is not practicable for a welder to work around a stationary tube of such a size. Therefore, to enable welding to be carried out conveniently, the lengths can be carried so that they can be rotated about their axes past a stationary welder.

Due to material grades and to ensure that an adequately strong weld is formed when welding steel tubular sections, the metal of the sections in the region of the weld area, must first be heated to ensure that the welding operation is effective. In many cases, a minimum temperature in the region of 100°C must be maintained at all times during welding.

At present, the most common way to heat the section in the region in which welding is to take place is to use an oxy-propane burner that produces a flame that is directed onto the surface of the section. This process can be dangerous to the pipe and to personnel, and inefficient in both time and energy. There is no temperature control to ensure that an upper threshold temperature (typically 300°C to 350°C) is not passed and the oxy-propane burners must be removed to a distance before welding can commence.

In GB-A-2 463 694, the present applicant disclosed a system for pre-heating a pipe prior to welding using inductive heating. This provides a significant improvement in control and safety of welding operations, on pipelines and other applications.

GB-A-0 794 001 discloses a method and apparatus for welding tubular bodies such as boilers. It uses an induction heating system to pre-heat a weld region. That system works when the environment in which welding is taking place is consistent so that the amount of heat energy to be applied to the weld region is predictable. However, when the nature of the welding operation is not known in advance, or it must take place in an unpredictable environment that may vary in temperature, or be cooled by wind, the system of GBAO 794 001 cannot be relied upon to maintain the weld region within a satisfactory temperature range.

The aim of the present invention is to bring the benefits of the system of GB-A-2 463 694 to rotational welding of large pipes in a wide variety of sites, including in the open when ambient temperature cannot be controlled.

To this end, from a first aspect this invention provides apparatus for pre-heating tubular articles prior to welding comprising a support for carrying tubular articles such that they can be rotated together about long axes of the articles, a heater having a heating head that can be placed adjacent to a region to be welded, and a thermal sensor operable to monitor the temperature of a region to be welded, whereby the articles can be rotated such that the region to be welded passes the heating head which supplies energy to the weld region, the signal from the sensor being used to control the amount of energy supplied by the heater to maintain the weld region within a desired temperature range, to enable it to be welded subsequently.

Most advantageously, the heating head generates heat within the articles to be welded by electromagnetic induction.

The heating head typically has an inner wall that is adjacent to the articles to be welded when in use, and which has is curved to extend closely adjacent to the articles to be welded around a region of their circumferences. The region of the inner wall over which the heating head extends may be in the range of 90° to 180°. In advantageous embodiments, the (effective of actual) radius of curvature of the inner wall can be varied to allow the head to adapt to tubular articles of various dimensions. For example, this may be achieved by constructing the heating head from a plurality of sections that are interconnected to be pivotable with respect to one another about axes that are generally parallel to the long axis of an article that is to be welded.

Embodiments may further include an indicating means that is operative, under the control of the heat sensor, to indicate whether or not the region to be welded is at a temperature that is within a range at which welding can take place.

Apparatus embodying the invention typically includes a power supply for operation of the heating head.

From a second aspect, the invention provides welding installation comprising pre-heating apparatus according to any preceding claim in combination with gas or arc welding apparatus.

From a third aspect, the invention provides a method of welding tubular articles comprising mounting the articles in the support of a pre-heating apparatus of a welding installation according to the second aspect of the invention, causing the articles to rotate such that a weld region passes adjacent to the heating head which supplies energy to the weld region, monitoring the temperature of the weld region and controlling the amount of energy supplied by the heater to maintain the weld region within a desired temperature range, and welding a part of the weld region after that part of the weld region has rotated past and has been heated by the heating head.

The welding region is typically heated to a temperature in the range of 100°C to 350°C, although in some applications, temperatures greater than or less than this range may be used.

Tubular articles welded in embodiments of this invention are typically metal, and most especially steel, tubes. The metal tubes may be structural supporting members, with a diameter of up to 8 m.

An embodiment of the invention will now be described in detail, by way of example, and with reference to the accompanying drawings, in which:
Figure 1 is an end view of a pipe being welded in accordance with an embodiment of the invention;
Figures 2 and 3 are, respectively, side and front views of the heating head of the embodiment of Figure 1;
Figure 4 shows the disposition of inductive heating cables within a heating head of the embodiment of Figure 1;
Figure 5 shows an alternative arrangement of a heating head being a component of apparatus embodying the invention; and
Figure 6 shows how the arrangement of Figure 5 can be adapted for use with tubes of various diameters.

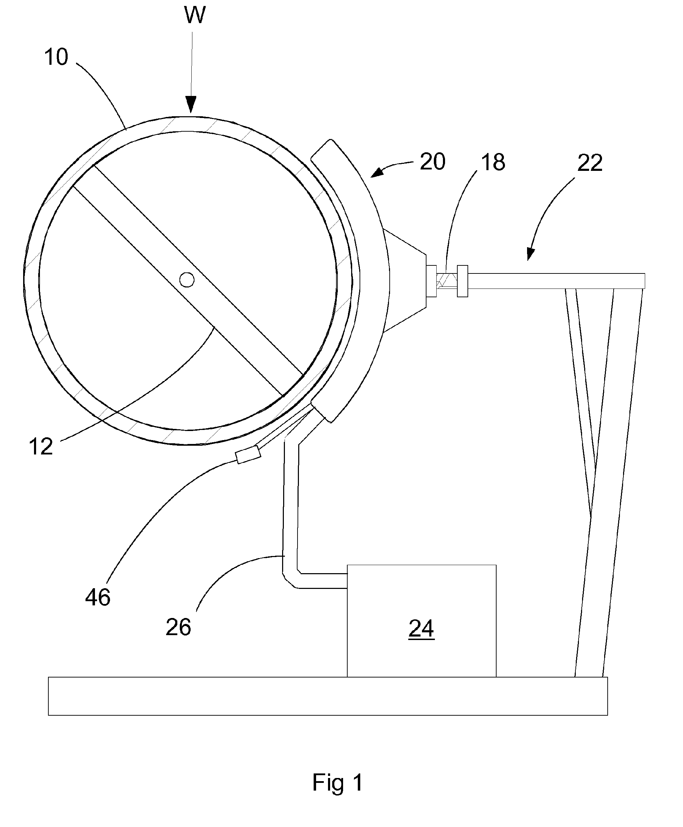

With reference first to Figure 1, for use with the present invention, steel tube sections 10 up to 8 m in diameter to be welded together are supported with their long axes generally horizontal and coincident with one another. The tube sections 10 are carried on respective jigs 12 such that they can be rotated about their axes.

The aim is to perform by a welding processes a peripheral weld that extends around two tube sections 10 to be butted and welded together to form a strong elongate length of tube. To achieve this, the steel must be pre-heated in the region of the weld of the tube sections 10. For satisfactory welding, the steel must be heated to the correct temperature in accordance with the applicable procedure.

To achieve that required pre-heating, this embodiment of the invention provides an induction heater, as will now be described.

The induction heater comprises a heating head 20 that is supported on a stand 22. A power supply 24 is connected to the heating head 20 by a power cable 26. The stand 22 allows the height of the heating head 20 above a floor to be adjusted, and preferably includes wheels or castors that allow it to be moved across a floor. A resilient connection 18, for example, in the form of a coil spring, is provided between the heating head 20 and the stand 22.

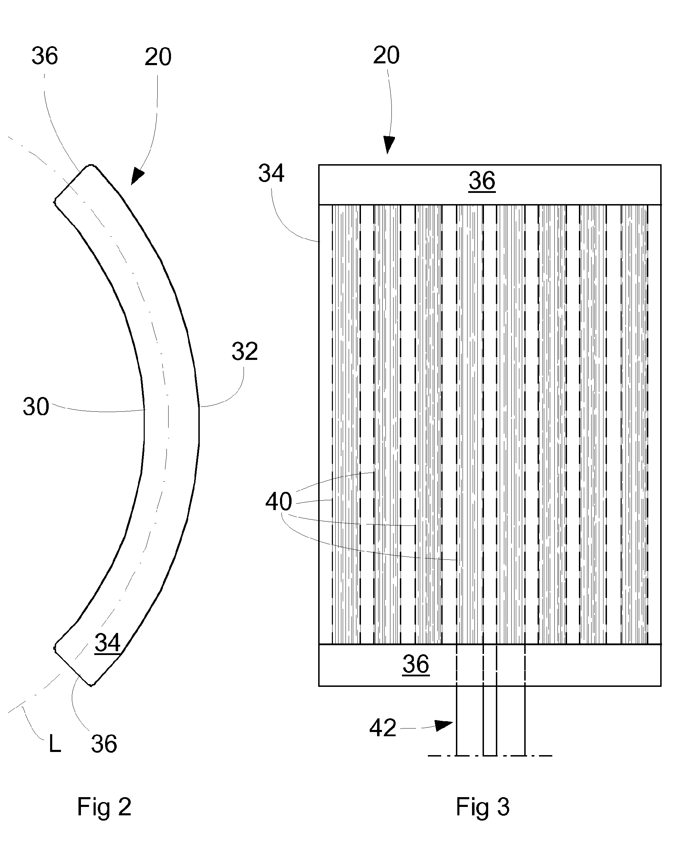

When seen along the axis of the pipe sections to be welded, the heating head 20 has a curved profile that extends in the range of 90° to 180° around a segment of a circular locus L, as shown in Figure 2 The heating head 20 has radially inner and outer plates 30, 32 interconnected by side and end walls 34, 36 to form an enclosure. The radius of the circular locus of the heating head 20 is chosen such that the inner plate 30 has a radius of curvature that is similar to or greater than the radius of the outer wall of the pipe segments to be welded.

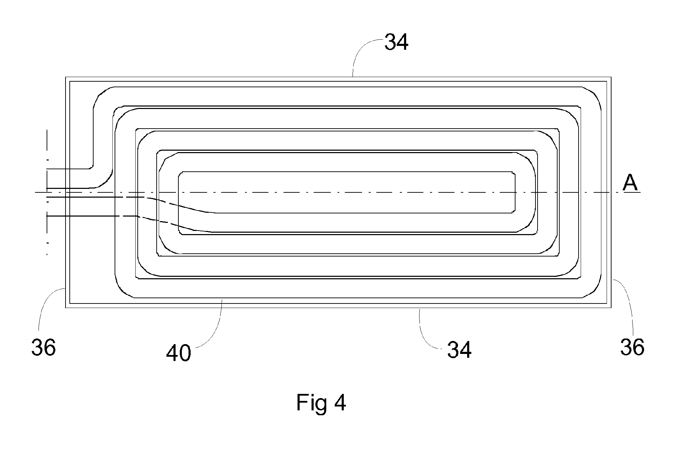

Enclosed within the heating head 20 is a length of inductive heating cable 40. The cable 40 enters and exits from the heating head 20 through one of its end walls 36, as shown at 42, as shown in Figure 3. Within the heating head 20, the cable extends, as shown in Figure 4, in an elongate coil arrangement. Long lengths of the cable running parallel to a long axis A of the head 20, and short lengths of the cable cross from one side of the long axis A to the other. The long lengths of cable on one side of the axis A all extend in the same direction, while those on the other side of the axis A extend in the opposite direction. The lengths of the heating cable 40 are closely packed together (this is not clearly shown in the diagrammatic representations of the drawings), apart from a region to both sides of the axis A.

The material from which the enclosure of the heating head 20 is made must be resistant to heat, at least up to the temperature to which the weld must be pre-heated, electrically insulating, and (at least in the case of the inner plate 30), highly permeable to magnetic fields. This is to ensure that the inductive heating field generated by the cable within the heating head 20 can pass freely through the inner plate 30 with a minimum of energy being absorbed by the enclosure. It must also be resistant to mechanical wear, as will be apparent from the description of a welding method embodying the invention, as will be described below. For example, the material may be a glass-fibre reinforced composite material, such as GPO-3 Polyester Glass and 4W/EP class B Epoxy Glass laminate sheet.

A welding operation that is performed in accordance with an embodiment of the invention will now be described.

Two steel tube sections 10 to be welded together are each mounted in a respective jig such that they can be rotated about their long axes and such that they are coaxial. The tube sections 10 are moved together such that they have annular end surfaces in abutting one another. (The tube sections 10 should have previously been subject to any required preparation for welding, such as cleaning and grinding flat of the end surfaces.)

The induction heater is then positioned such that its heating head 20 is as close as possible to the tube sections 10 such that the heating head 20 covers an end region of each of the tube sections 10 - that is, so that part of the region to be welded is covered by the heating head 20. The heating head 20 is positioned as closely as possible to the tube sections 10. It is inevitable that the tube sections 10 will, from time to time, make contact with the inner plate 30 of the heating head 20, which must therefore be reasonably resistant to mechanical wear. The resilient section 18 allows slight movement of the heating head 20 when such contact takes place, so that the heating head 20 does not become jammed against the tube sections 10.

The power supply 24 is then energised to supply energy to the inductive heating cable 40. This is an alternating current typically in the range of 5-30 kHz at a power of up to 3 5 kW.

The two tube sections 10 are then rotated slowly. The speed of rotation is chosen such that any one piece of the tube 10 spends sufficient time within the field of the heating cables 40 for its temperature to be raised to a temperature suitable for welding. The tube sections 10 can then be welded continuously as they are rotated past a stationary welder, for example, at a position indicated at **W** in Figure 1.

The apparatus may be operated in an open loop control mode, wherein a constant supply of power is delivered to the heating cable 40 sufficient to provide the required degree of heating. Alternatively, the operation may be enhanced by used closed loop control. In such cases, a thermal sensor 46 is provided to monitor the temperature of the tube sections 10. Such a sensor 46 may is preferably a non-contact type, such as an infra-red sensor, but a contact thermocouple could be used instead. The signal from the sensor 46 is used to control the amount of energy supplied by the power supply 24 to the heating cable 40 to maintain the tube sections 10 within a desired temperature range, so preventing insufficient heating or overheating.

The sensor can also be used to provide an indication that the tube sections 10 are at a temperature at which the welding procedure can begin. For example, the indication may be provided by a visual display feature on the power supply 24 only when the sensor detects that the weld region is at a temperature at which the welding procedure can begin.

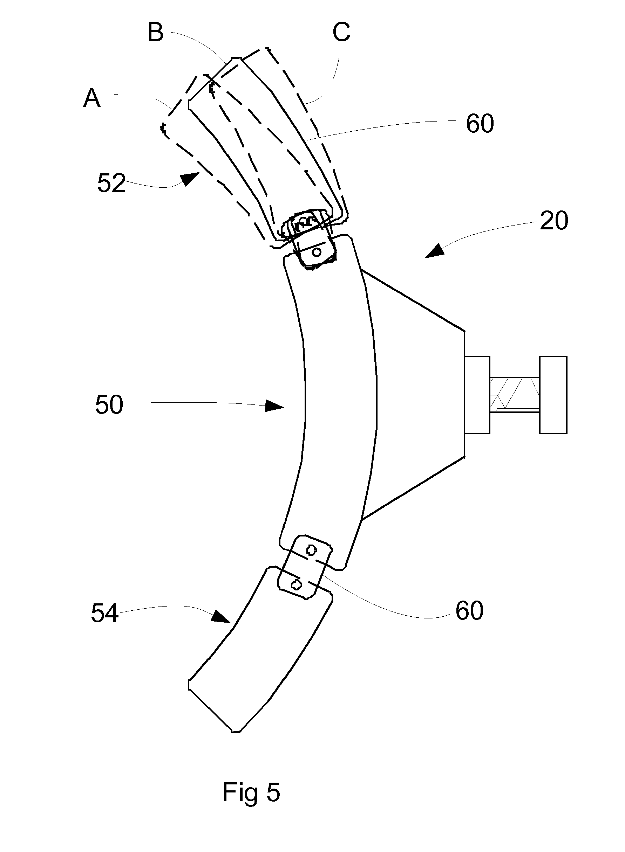

It will be appreciated that the apparatus of this embodiment is suitable for welding tube sections that are of a specific diameter to pass closely to the heating cable 40 within the heating head. This limitation can be removed by arranging for the radius of curvature of the heating head to be variable, such that it can accommodate a tube sections with a range of different radii. One embodiment by which this can be achieved is shown in Figure 5.

In this embodiment, the heating head 20 is formed from several (in this case three) sections - a central section 50 and outer sections 52, 54, that are interconnected by hinge elements 60 such that they can pivot with respect to one another along axes that are parallel to the axis of the locus **L**. Inner walls of the sections 50, 52, 54 may be curved, as in the embodiment described above or they may be straight, to facilitate their manufacture. The heating cables 40 are formed into a spiral arrangement, as described above, which extends through all of the sections.

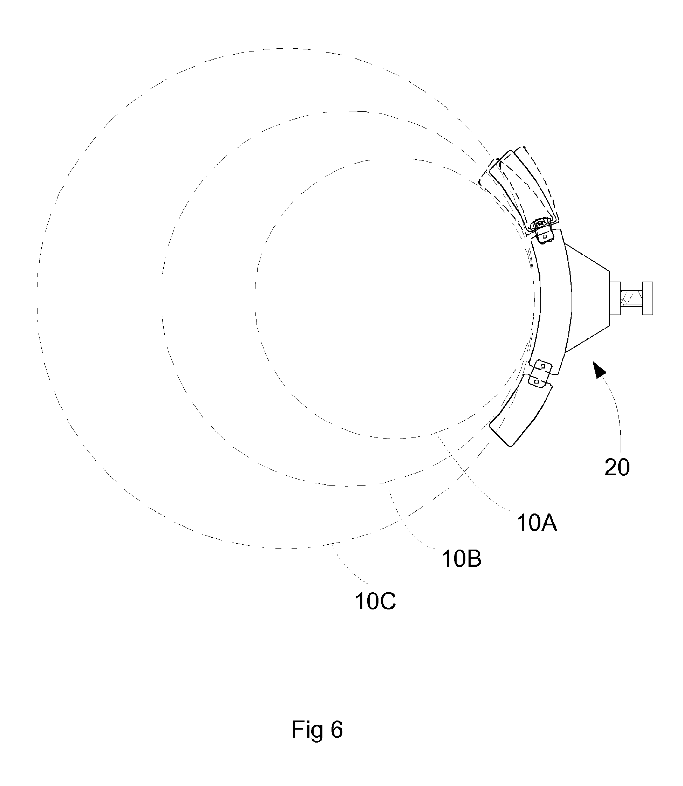

The outer sections 52, 54 can be pivoted, with respect to the central section 50, between inner and outer extreme positions. Figure 5 shows the upper outer section 52, at the inner extreme position, an intermediate position and the outer extreme position at A, B and C respectively. Figure 6 shows how this allows the heating head 20 to adapt to tubes 10A" 10B, 10C of increasing diameters.

## Claims

1. Apparatus for pre-heating tubular articles (10) prior to welding comprising a support (22) for carrying tubular articles such that they can be rotated together about long axis (A) of the articles, a heater having a heating head (20) that can be placed adjacent to a region to be welded, whereby the articles can be rotated such that the region to be welded passes the heating head (20) which supplies energy to the weld region, **characterised in that** the apparatus further comprises and a thermal sensor (46) operable to monitor the temperature of a region to be welded, the signal from the sensor being used to control the amount of energy supplied by the heater to maintain the weld region within a desired temperature range, to enable it to be welded subsequently.

2. Apparatus according to claim 1 in which the heating head generates heat within the articles to be welded by electromagnetic induction.

3. Apparatus according to claim 1 or claim 2 in which the heating head has an inner wall (30; 50, 52, 54) that is adjacent to the articles to be welded (10) when in use, and which is curved to extend closely adjacent to the articles to be welded (20) around a region of their circumferences.

4. Apparatus according to claim 3 in which the region over which the inner (30) wall extends is in the range of 90° to 180°.

5. Apparatus according to claim 3 or claim 4 in which the effective radius of curvature of the inner wall (30) can be varied to allow the head to adapt to tubular articles of various dimensions.

6. Apparatus according to claim 5 in which the heating head comprises a plurality of sections (50, 52, 54) that are interconnected to be pivotable with respect to one another about axes that are generally parallel to the long axis (A) of an article that is to be welded.

7. Apparatus according to claim 6 that further includes an indicating means that is operative, under the control of the heat sensor (46), to indicate whether or not the region to be welded is at a temperature that is within a range at which welding can take place.

8. Apparatus according to any preceding claim, further including a power supply (24) for operation of the heating head.

9. A welding installation comprising pre-heating apparatus according to any preceding claim in combination with any welding process.

10. A method of welding tubular articles (10) comprising mounting the articles in the support of a pre-heating apparatus of a welding installation according to claim 9, causing the articles to rotate such that a weld region passes adjacent to the heating head (20) which supplies energy to the weld region, and welding a part of the weld region after that part of the weld region has rotated past and has been heated by the heating head, the method being **characterised by** monitoring the temperature of the weld region and controlling the amount of energy supplied by the heater to maintain the weld region within a desired temperature range,.

11. A method according to claim 10 in which the welding region is heated to a temperature to suit procedural requirements.

12. A method according to claim 10 or claim 11 in which the tubular articles are metal tubes.

13. A method according to claim 12 in which the metal tubes are structural or fabricated items.

14. A method according to claim 12 or claim 13 in which the metal tubes have a diameter of up to 8 m.
